# EUROPÄISCHE PATENTSCHRIFT

(11) **EP 0 586 329 B1**
(45) Veröffentlichungstag und Bekanntmachung des Hinweises auf die Patenterteilung: **10.01.1996**
(21) Anmeldenummer: 93810151.6
(22) Anmeldetag: 01.03.1993
(51) Int. Cl.: C02F 3/20, B01F 3/04, F16B 5/06, F16B 3/00

(54) **Gasverteiler zum feinblasigen Belüften von Wasser**
Fine-bubble diffuser, especially for water aeration
Diffuseur à bulles fines, spécialement pour l'aération de l'eau

(30) Priorität: 31.08.1992 CH 2722/92
(43) Veröffentlichungstag der Anmeldung: 09.03.1994
(73) Patentinhaber: BONTEC AG, CH-8716 Schmerikon (CH)
(72) Erfinder: Heck, Urs, CH-8715 Schmerikon (CH)
(74) Vertreter: Legland, Brynjulv

(56) Entgegenhaltungen:
- EP-A- 0 171 452
- EP-A- 0 359 698

## Beschreibung

Die Erfindung betrifft einen Gasverteiler zum feinblasigen Belüften von Wasser gemäss dem Oberbegriff des ersten Patentanspruches.

Derartige Gasverteiler werden zum Belüften von Wasser, z.B. in biologischen Abwasser-Reinigungsanlagen, oder zur Sauerstoffzufuhr zur Verbesserung der Lebensbedingungen in Binnenseen (künstliche Beatmung) eingesetzt.

Solche Gasverteiler sind z.B. in EP-A-0 359 698 (D1) (Messner) anhand der Fig. 1 bis 3 sowie 11 beschrieben. Bei dieser Ausführung wird davon ausgegangen, dass jede Längs- und Querseite der Platte jeweils einen separaten Abschluss aufweist, so dass insgesamt vier seitliche Abschlüsse pro Platte erforderlich sind. Dabei entstehen Probleme an den vier Ecken zwischen den einzelnen Profilabschnitten, weil die Membrane an diesen Stellen undicht ist und leicht zerreisst, was ferner auf die verwendete Art von Riffelungen zurückzuführen ist. Die in den Fig. 2 und 3 gezeigten L- oder Winkel-Profile sind lediglich für gerade und nicht für bogenförmige Strecken ausgelegt bzw. geeignet. Auch die Ausführung nach Fig. 11 (D1) ist für eine Krümmung in der horizontalen Ebene nicht anwendbar, weil der Tunnel 29 dies nicht zulässt. Das Einschieben des Profils 30 führt hier praktisch zwangsläufig zu einer Verletzung der Membrane. Das Profil kann nur von einem der beiden Enden der Ausnehmung eingeführt werden, was den Montagevorgang erschwert.

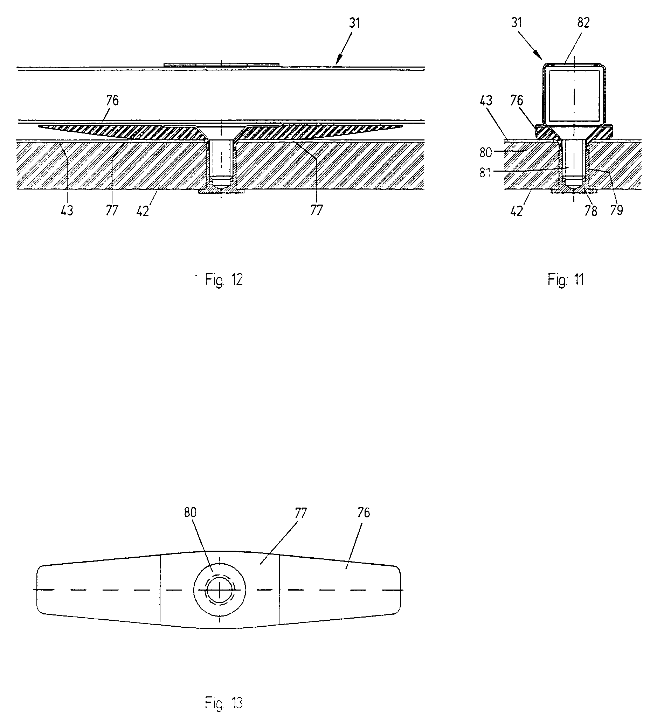

Ferner zeigt Fig. 12 in D1 niederhaltende Elemente 34, die mittels Schrauben 37 befestigt sind, welche die Membrane durchbohren und infolgedessen diese leicht verletzen können. Das Anbringen derartiger Elemente ist nicht nur zeitraubend, sondern birgt die Gefahr in sich, dass die Membrane verletzt allmählich auf und sind auf die wechselnden Druckverhältnisse zwischen der Membrane und der Grundplatte zurückzuführen.

Zudem ist die erwähnte Ausführung (Messner) mit dem Nachteil behaftet, dass sie zwischen den niederhaltenden Elementen und dem plattenartigen Grundelement für die Luftzirkulation zu wenig Spielraum bietet. Demzufolge kann die Luft nicht in ausreichendem Masse zirkulieren, was zu einer reduzierten Effizienz führt. Ferner entstehen in bestimmten Abschnitten grössere Auswölbungen, die schwer zu beheben sind.

Nicht nur bei Messner, sondern auch bei anderen Ausführungen werden Leisten und Schrauben zur Befestigung der Membrane an der Grundplatte verwendet, wobei unterschiedliche Materialien, wie rostfreier Stahl und Kunststoff, miteinander verschraubt werden. Bei Wärme- oder Kälteeinfluss kann dies - wegen der unterschiedlichen Ausdehnungskoeffizienten - zu Verspannungen und auch Rissen führen. Zudem werden Klebeverfahren benutzt, obschon diese Halterungsart unter wechselndem Druck problematisch ist. Bei den verwendeten Klebeverfahren besteht die Gefahr, dass die Membrane beim Wegreissen verletzt wird. Schliesslich ist der Arbeitsaufwand zum Wechseln einer Folie bei bekannten Verfahren derart gross, dass er sich kaum noch lohnt.

Aufgabe der vorliegenden Erfindung ist somit die Schaffung eines Gasverteilers, der die Nachteile bestehender Ausführungen nicht aufweist.

Der gesuchte Gasverteiler soll sowohl die Herstellung als auch die Reparatur erleichtern. Ferner soll er im fertigen Zustand bis zur Montagestelle transportiert und dort mit wenig Arbeitsaufwand montiert werden können.

Diese Aufgabe ist erfindungsgemäss durch die Merkmale im Kennzeichnungsteil des ersten Patentanspruches gelöst.

Ausführungsformen sind in den abhängigen Patentansprüchen offenbart.

Der so geschaffene Gasverteiler hat gegenüber herkömmlichen Ausführungen u.a. die folgenden Vorteile:
- eine absolut problemlose Abdichtung der Eckzonen der Membrane,
- das Auswechseln der Membrane bei etwaigen Unterhaltsarbeiten wird stark vereinfacht,
- eine Verletzung der Membranen durch das Lösen von Klebeverbindungen wird verhindert,
- Beschädigungen durch unterschiedliche Temperaturkoeffizienten der einzelnen Materialien werden vermieden, und
- eine wiederholte Wiederverwendung der einzelnen Membranen ist ohne weiteres möglich.

Nachfolgend werden Ausführungsbeispiele des erfindungsgemässen Gasverteilers anhand der Zeichnung näher erläutert. Es zeigen:

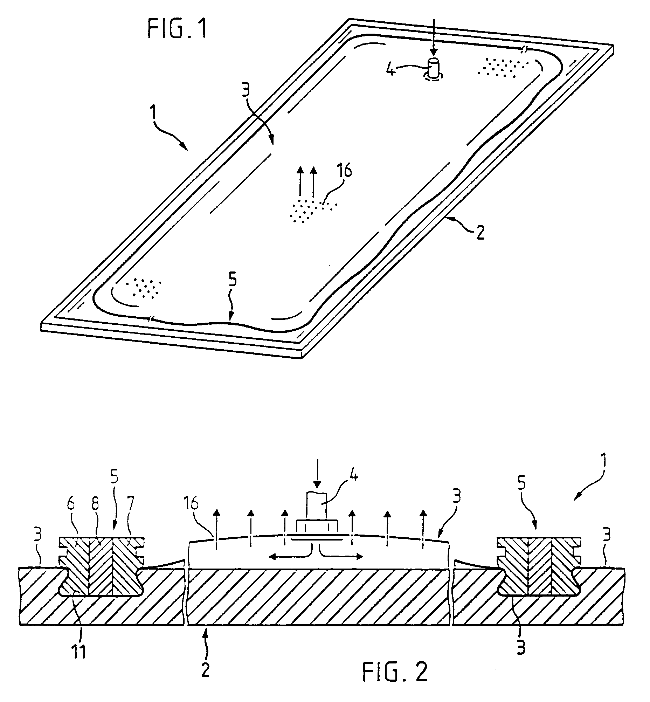

- Fig. 1: eine schrägbildliche Darstellung einer Belüfterplatte mit Grundplatte und eingeklemmter Membrane,
- Fig. 2: einen Querschnitt durch Fig. 1 im Betriebszustand,

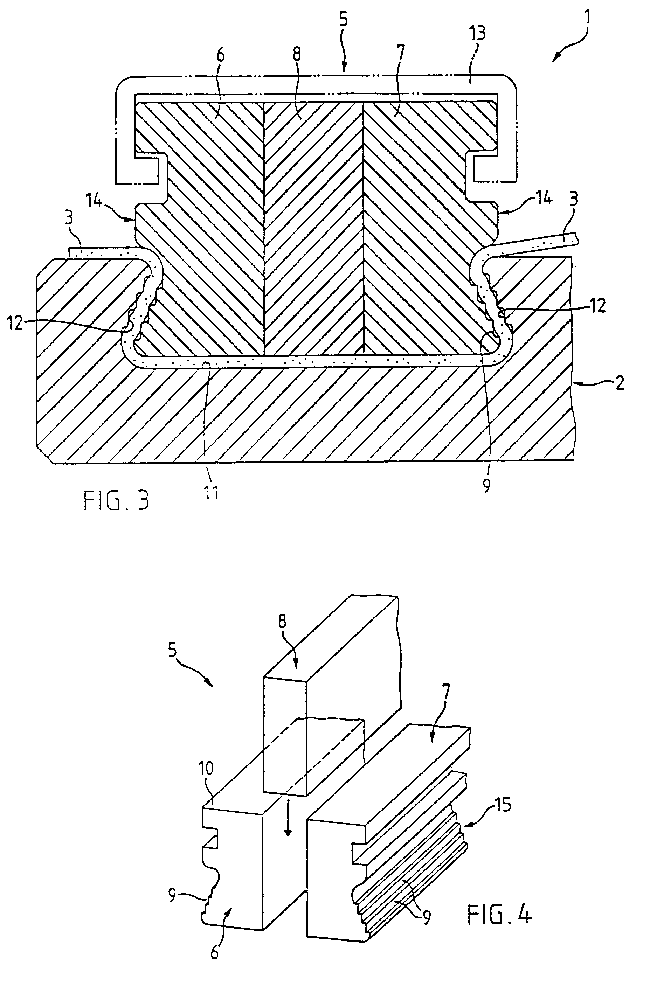

- Fig. 3: einen Ausschnitt aus Fig. 2 in grösserem Massstab,
- Fig. 4: eine schrägbildliche Darstellung der drei Stäbe nach Fig. 3,

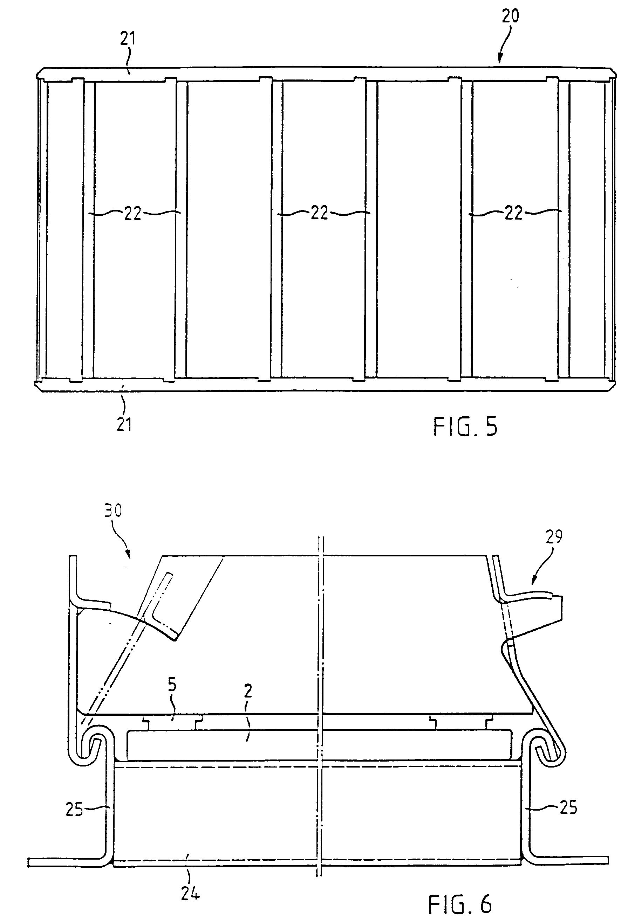

- Fig. 5: eine Draufsicht einer Bodenplatte zur Aufnahme und Befestigung der Grundplatte,
- Fig. 6: einen Querschnitt durch die Befestigung der Grundplatte an der Bodenplatte,

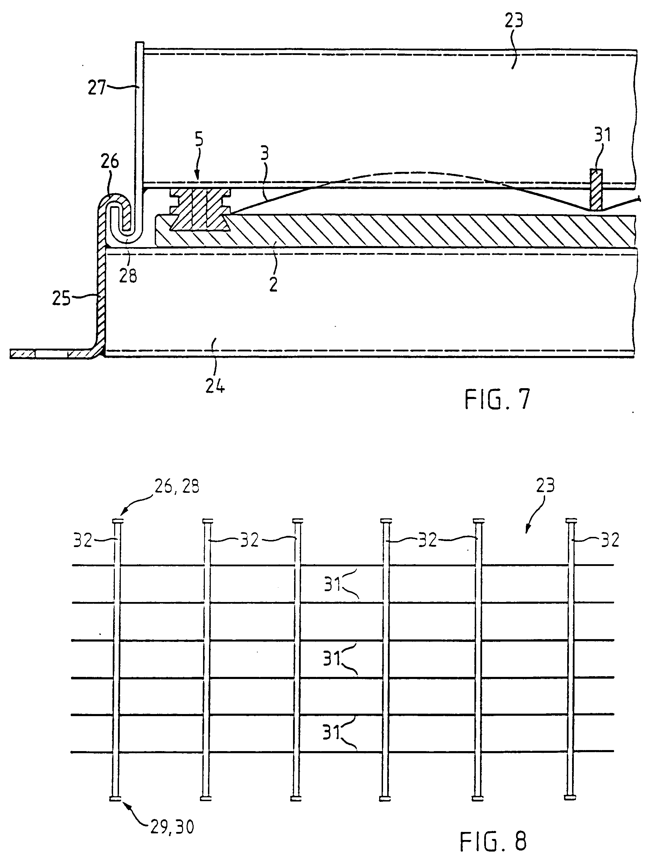

- Fig. 7: einen Schnitt durch einen Rost-Oberteil und einen Rost-Unterteil mit Schnellverschluss, und
- Fig. 8: eine Draufsicht auf den Rost-Oberteil zur Halterung der Grundplatte an der Bodenplatte.

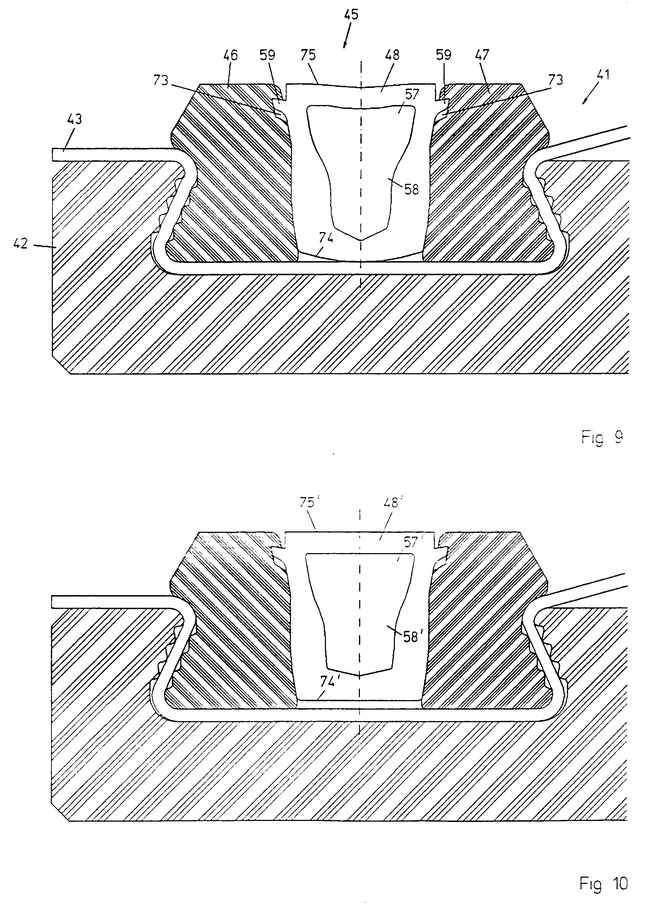

- Fig. 9: eine erste Variante zu Fig. 3,
- Fig. 10: eine zweite Variante zu Fig. 3,
- Fig. 11: einen vertikalen Querschnitt durch einen Längsträger zur Halterung der Belüftermembrane,
- Fig. 12: einen vertikalen Längsschnitt durch den Längsträger nach Fig. 11,

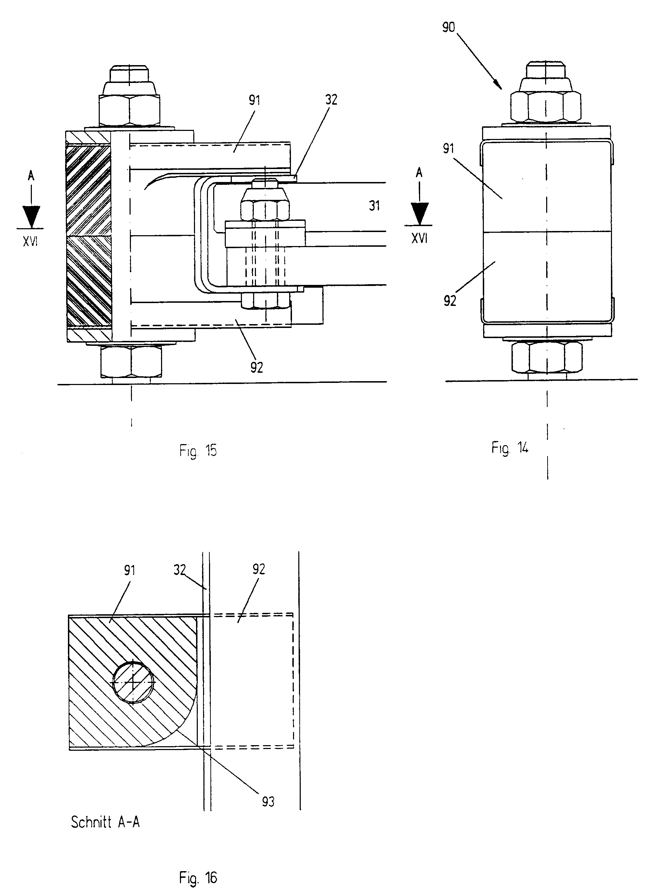

- Fig. 13: eine Draufsicht des in Fig. 12 unter dem Längsträger angeordneten Stützkörpers für die Membrane,
- Fig. 14: eine Rückansicht eines Schnellverschlusses zur Halterung der Belüfterplatte,
- Fig. 15: eine schematische Seitenansicht des Schnellverschlusses nach Fig. 14, teilweise im Schnitt, und
- Fig. 16: einen Schnitt längs der Linie XVI - XVI in Fig. 15.

In Fig. 1 - 4 ist eine Belüfterplatte 1 mit einer Grundplatte 2 und einer daran befestigten Membrane 3 mit einem Rohranschluss 4 zur Zufuhr von Frischluft, Sauerstoff oder sonstigen Gasen dargestellt. Die Grundplatte 2 wird vorteilhaft aus Kunststoff hergestellt, kann aber auch aus Holz, Holzfasern oder dgl. bestehen. Die Membrane 3 ist vorzugsweise eine gummieelastische, mit Öffnungen 16 versehene Gas- oder Luftverteilerfolie. Die Luft- oder Gaszufuhr durch den Rohranschluss 4 zum Raum zwischen der Grundplatte 3 und der Membrane 3 ist im Verhältnis zu den Öffnungen 16 in der Membrane 3 derart bemessen, dass sie sich unter einem Innendruck aufwölbt, wie dies in Fig. 2 gezeigt ist. Die Menge des durch die Öffnungen 16 fliessenden Gases wird auf Grund der Ausbildung der Membrane 3 festgelegt. Beidseits der Belüfterplatte 1 ist jeweils eine endlose Befestigungsvorrichtung 5 gezeigt, welche die Membrane 3 mit der Grundplatte 2 verbindet. Diese Vorrichtung 5 besteht aus drei Profilen 6 bis 8, von welchen die beiden äusseren 6 und 7 gleich ausgeführt und deren Rücken einander zugekehrt sind. Zwischen diesen Rücken ist das dritte Profil 8 eingepresst. Alle drei Profile 6 bis 8 haben etwa die gleiche Breite und Höhe, jedoch sind die äusseren Profile 6 und 7 auf der einen Seite mit Vorsprüngen 10 und Rillen 9 versehen, welche die Membrane 3 fest gegen die im Querschnitt treppenförmigen Seitenwand 12 einer sonst schwalbenschwanzförmigen Ausnehmung 11 in der Grundplatte 2 mit Querschnitt drückt. Die an die Seitenwand 12 anliegenden Seiten der beiden Profile 6 und 7 sind ebenfalls im Querschnitt treppenförmig ausgebildet und gewähren dadurch ein Festklemmen der Membrane 3, ohne dass sie beschädigt wird.

Wenn der Innendruck zwischen der Membrane 3 und der Grundplatte 2 zunimmt, werden die drei Profile 6 - 8 zusammen nach oben, in Richtung der Ausnehmung 11, hinausgepresst, was somit den Druck oder die Haltefestigkeit zwischen der Befestigungsvorrichtung 5 und der Membrane 3 erhöht. Diese Wirkung wird deshalb erzielt, weil die Ausnehmung 11 oben schmaler ist als unten und weil die Befestigungsvorrichtung 5 wegen ihrer Breite nicht aus der Ausnehmung herausgezogen werden kann, solange das dritte oder mittlere Profil 8 nicht herausgezogen wird.

Damit sich das eingeklemmte, mittlere Profil 8 nicht von den beiden äusseren Profilen 6,7 löst, kann es mit wiederhakenartigen Längsrillen ausgestattet sein, die an den benachbarten Wandungen der äusseren Profile 6 und 7 eingreifen. Ferner können Klemmen 13 benutzt werden, welche die drei Profile 6 bis 8 umfassen und an den Aussenwänden 14 der beiden äusseren Profile 6 und 7 eingreifen. Damit der Eingriff zwischen den Klemmen 13 und den Aussenwänden 14 während längerer Zeit bestehenbleibt, können diese mit entsprechend ausgebildeten Rillen versehen werden.

Zur Herstellung des Gasverteilers wird zuerst eine Grundplatte 2 mit einer Ausnehmung 11 hergestellt, die vorzugsweise einen schwalbenschwanzförmigen Querschnitt aufweist. In diese Ausnehmung 11 werden die zwei äusseren Profile 6,7 derart eingelegt, dass ihre schräg zur Grundplattenebene verlaufende Seitenfläche jeweils gegen die eine Seitenwand 12 der schwalbenschwanzförmigen Ausnehmung 11 anliegt. Danach wird das mittlere Profil 8 zwischen den beiden äusseren Profilen eingepresst. Dieser Einpressvorgang erfolgt vorzugsweise manuell oder maschinell mittels einer unter Druck stehenden Rolle, die von einem Ende der Grundplatte zum anderen läuft.

Die einzelnen Profile 6 bis 8 können als biegsame Stäbe oder Ringe ausgebildet sein.

Zur Vereinfachung der Montage können die beiden äusseren Profile 6,7 beispielsweise durch dünne Kunststoffstege verbunden sein, die sich der Membrane 3 entlang erstrecken.

Die Verwendung von Klemmen 13 zur Festhaltung der drei Profile 6 bis 8 in der Ausnehmung 11 ist als eine erhöhte Sicherheitsmassnahme anzusehen und nicht als notwendig zu betrachten. Andererseits erfordert das Anbringen dieser Klemmen 13 mit einem Spezialwerkzeug nur einen sehr geringen Arbeitsaufwand, so dass deren Kosten praktisch vernachlässigbar sind. Damit die Klemmen 13 sicher sitzen, kann der obere Teil der Aussenflächen 14 der beiden äusseren Profile 6,7 mit Rillen versehen werden, in welche sich die Klemmen 13 festhaken.

Eine weitere Möglichkeit zur Halterung der Profile in der eingesetzten Position besteht darin, die Aussenseiten des mittleren Profils mit wiederhakenartigen, sich in deren Gesamtlänge erstreckenden Vorsprüngen zu versehen. Zudem können die Innenflächen der äusseren Profile 6,7 mit Vorsprüngen versehen werden, welche in diejenigen des mittleren Profils 8 eingreifen.

Damit diejenigen Teile der Aussenflächen der äusseren Profile 6,7, welche gegen die Seitenwände 12 der Ausnehmung 11 anliegen, einen festeren Griff in die Membrane 3 gewährleisten, können diese Flächenabschnitte im Querschnitt treppenartig ausgebildet sein. Die dadurch entstandenen Sägezähne greifen in die Membrane 3 ein, ohne sie zu verletzen.

In Fig. 5 ist eine Bodenplatte 20 gezeigt, die selbsttragend oder am Boden angeordnet ist und zur Aufnahme und Befestigung der Grundplatte 2 dient. Die Bodenplatte 20 besteht aus Längs- 21 und Querträgern 22, die miteinander verschraubt oder verschweisst sein können. Der Bodenrahmen ist am Boden eines Sees oder eines Bassins befestigt, für eine längere Lebensdauer ausgelegt und im Gegensatz zur Grundplatte 2 nicht für einen Austausch vorgesehen. Bei der Bodenplatte 20 handelt es sich somit um eine einmalige Ausführung, die normalerweise keinen Unterhalt erfordert.

Fig. 7 zeigt einen Querschnitt durch einen selbsttragenden Rost-Unterteil 24 mit einem daran befestigten Rost-Oberteil 23. Die beiden Rostteile 23 und 24 sind an einem Ende durch ein am Boden befestigtes Winkeleisen 25 verbunden, das oben zu einem Haken 26 gebogen ist, in den ein weiterer Haken 28 eines Flacheisens 27 eingreift. Wenn die Grundplatte 2 auf die Bodenplatte 20 aufgelegt ist, wird der Haken 28 am Rost-Oberteil 23 in den Haken 26 des Rost-Unterteil 24 eingesetzt und mittels eines Schnellverschlusses 29 derjenigen Art verspannt, welche in Fig. 6 dargestellt ist. Derartige Schnellverschlüsse 29,30 sind bereits bekannt und werden hier nicht näher erläutert.

Der Rost-Oberteil 23 (Fig. 8) besteht aus mehreren Längs- 31 und Querträgern 32, die miteinander verbunden sind. Auf der einen Längsseite sind die Querträger 32 mit einem Flacheisen 27 mit einem Haken 28 versehen und auf der anderen Seite mit einem Schnellverschlussteil, der einen sicheren Verschluss gewährleistet.

Durch diese Befestigungsart wird erreicht, dass zum Austausch der Membranen keine Schrauben oder Klebstellen gelöst werden müssen. Der Rost-Oberteil 23 muss lediglich mittels der Schnellverschlüsse 29,30 gelöst und abgehoben werden, wonach die Grundplatte 2 mit der Membrane 3 abgehoben werden kann. Das Verbinden der beiden Rostteile 23,24 mittels Haken 26,28 und Schnellverschlüssen 29,30 hat - vom Arbeitsaufwand abgesehen - ferner den Vorteil, dass die Membrane 3 nicht durchstochen wird und somit nicht zerreissen kann.

Der Rost-Oberteil 23 hat nicht nur die Aufgabe, die Grundplatte 2 mit der Membrane 3 am Rost-Unterteil 24 festzuhalten, sondern verhindert ferner, dass sich die Membrane 3 unter der Einwirkung der zwischen der Grundplatte 2 und der Membrane 3 eingeblasenen Luft od. dgl. zu sehr nach oben ausweitet.

Zudem wird verhindert, dass die Membrane 3 durch eine stellenweise zu starke Ausdehnung bersten kann.

In Fig. 9 ist eine Variante zu Fig. 3 dargestellt, in welcher auf die darin skizzierte Klemme 13 definitiv verzichtet werden kann. Bei dieser Ausführung sind die beiden äusseren Profile 46, 47 der Befestigungsvorrichtung 45, wie in Fig. 3, gleich und wenig kompressibel ausgebildet, wogegen das mittlere Profil 48 stark kompressibel ist, was dadurch erreicht wird, dass es im Inneren einen oder mehrere Hohlräume 57, 58 aufweist. Die Kompressibilität dient zur Aufnahme der Plus-Toleranzen der beiden äusseren Profile 46. Ferner ist das mittlere Profil 48 auf den den äusseren Profilen 46,47 gegenüberliegenden Flächen beidseits mit sich in der Längsrichtung erstreckenden Vorsprüngen 59 versehen, die in entsprechend ausgebildeten Rillen 73 eingreifen. Beim Eindrücken des mittleren Profils 48 wird es zusammengepresst und erweitert sich nachher wegen seiner Spannkraft in der eingesetzten Stellung derart, dass die Vorsprünge 59 in die Rillen 73 eingreifen. Das mittlere Profil 57 greift somit sowohl kraft- als auch formschlüssig in die beiden äusseren Profile 46 und 47 ein, die dadurch nach aussen gegen die Membrane 43 gepresst werden. Beim Lösen des mittleren oder dritten Profils 48 werden die ineinander eingreifenden Vorsprünge 59 und die Rille 73 auseinandergepresst, so dass sich der Eingriff jeweils einseitig löst und das mittlere Profil 48 herausgezogen werden kann. Der Vorsprung 59 ist im Querschnitt derart leicht hakenförmig ausgebildet, dass eine eigentliche Einhakung stattfindet, so dass ein Herausgleiten des mittleren Profils 48 verhindert wird. Andererseits verläuft die untere Fläche des hakenförmigen Vorsprunges 59 schräg nach oben, so dass er leicht hineingeschoben werden kann. Im unteren Abschnitt ist das mittlere Profil 48 so bemessen, dass es die äusseren Profile 46,47 mittels elastischer Federkraft gegen die Membrane 43 drückt. Im gespannten Zustand verlaufen die obere und die untere Fläche 74 und 75 bogenförmig.

Fig. 10 zeigt eine Variante, die mit Fig. 9 grosse Ähnlichkeit aufweist, wobei der einzige Unterschied darin besteht, dass das mittlere Profil 48' in der eingesetzten Position nicht zusammengepresst ist, weil die äusseren Profile 46 keine Plus-Toleranz aufweisen. Aus Fig. 10 geht hervor, dass die beiden Flachen 74' und 75' praktisch eben verlaufen.

In den Fig. 11 und 12 ist eine Befestigung der Membrane 43 mittels der Längsträgern 31 (Fig. 8) gezeigt. Ein Längsträger 31 ist in Fig. 11 im Querschnitt und in Fig. 12 in einer Seitenansicht dargestellt. Ferner zeigt Fig. 13 eine Draufsicht eines propellerartigen Formkörpers 76, dessen Aufgabe darin besteht, die Membrane zu schützen, wenn sie unter Druck steht. Beim Aufwölben der Membrane 43 lehnt sich diese gegen den Formkörper 76, so dass sie im Befestigungsbereich nicht unter allzu grosser Spannung steht.

Die Membrane 43 ist z.B. an zwei oder mehr Stellen zwischen den Enden des einzelnen Längsträgers 31 befestigt, wobei die Befestigung in den Fig. 11 und 12 gezeigt ist. Im Befestigungsbereich 77 ist der Formkörper 76 eben und drückt die Membrane 43 gegen die Grundplatte 42. Dazu wird eine Gewindehülse 78 mit Kragen von unten in ein Befestigungsloch 79 und der Formkörper 76 mit einem Loch mit kegelstumpfförmiger Wandung 80 eingesetzt. Zur Halterung der Längsträger 31 werden Klammerbleche 82 benutzt und erst nach dessen Befestigung mittels der Schrauben 81 wird der Längsträger 31 eingezogen.

In den Fig. 14 bis 16 ist ein Schnellverschluss 90 zum Festklemmen der Grundplatte 42 mit Membrane 43 und Längsträger 31 mit dem Querträger 32 gezeigt. Fig. 14 zeigt eine Seitenansicht in der Längsrichtung der Querträger 32 im gespannten Zustand. Der Schnellverschluss 90 umfasst einen oberen Teil 91, der relativ zu oder zusammen mit einem unteren Teil 92 zur Beschleunigung der Montage um 90° drehbar ist. Zu diesem Zweck ist die Kante 93 kreisförmig abgerundet.

Für einen Fachmann ist es selbstverständlich, dass eine Reihe von Abweichungen von den hier beschriebenen Ausführungsformen innerhalb des in den Ansprüchen festgelegten Schutzbereiches möglich sind.

Ferner kann sich durch diese Befestigungsart die Grundplatte unter Wärme- und Kälteeinfluss frei ausdehnen oder zusammen ziehen, ohne dass es zu Verspannungen oder Rissen kommen kann. Sie ermöglicht vor allem die Verwendung von Materialien unterschiedlicher Wärmeausdehnungskoeffizienten für die Längs- und Querträger.

Ein weiterer Vorteil der vorliegenden Ausführung besteht darin, dass die fertige Platte selbstragend und stabil ist. Sie kann in montagefertiger Form angeliefert und schnell montiert werden.

Ferner wird darauf hingewiesen, dass das verwendete Material recyclierbar ist, und dass die verschiedenen Dehnungskoeffizienten bei den auftretenden Temperaturen keine Spannungen verursachen.

Die in den Fig. 11 und 12 gezeigte Ausführung ermöglicht eine sehr genau zentrierte, saubere Montage des Form- oder Klemmkörpers 76, was zur Vermeidung von Spannungen in der Folie sehr wichtig ist.

### Überweisungsziffer

- 1: Belüfterplatte
- 2: Grundplatte
- 3: Membrane
- 4: Rohranschluss
- 5: Befestigungsvorrichtung
- 6: äusseres Profil
- 7: äusseres Profil
- 8: mittleres oder drittes Profil
- 9: Rillen (treppenförmig 6,7)
- 10: Vorsprung
- 11: Ausnehmung
- 12: Seitenwand (von 2)
- 13: Klemme
- 14: Aussenwand (6,7)
- 15: Seitenfläche
- 16: Öffnungen (in 3)
- 20: Trägerplatte
- 21: Längsträger (von 20)
- 22: Querträger (von 20)
- 23: Rost-Oberteil
- 24: Rost-Unterteil
- 25: Winkeleisen (von 24)
- 26: Haken (von 23,25)
- 27: Flacheisen (von 23)
- 28: Haken (von 23,27)
- 29: Schnellverschluss
- 30: Schnellverschluss
- 31: Längsträger (von 23)
- 32: Querträger (von 23)
- 41: Belüfterplatte
- 42: Grundplatte
- 43: Membrane
- 44: Aussenwand
- 45: Befestigungsvorrichtung
- 46: Profil, aussen
- 47: Profil, aussen
- 48: Profil, mittleres
- 49: Rille (von 46,47)
- 50: Vorsprung
- 51: Ausnehmung
- 52: gerillte Seitenwände (von 42)
- 57: oberer Luftraum
- 58: unterer Luftraum
- 59: Vorsprung (von 48)
- 60: Trägerplatte
- 73: Rille in 46,47
- 74: untere Fläche
- 75: obere Fläche
- 76: Form- oder Klemmkörper
- 77: Befestigungsbereich
- 78: Gewindehülse
- 79: Befestigungsloch
- 80: Wandung
- 81: Schraube
- 82: Loch
- 90: Schnellverschluss
- 91: Oberteil
- 92: unterer Teil
- 93: Kante

## Patentansprüche

1. Gasverteiler zum feinblasigen Belüften von Wasser, mit einer Boden- (20) und einer Grundplatte (2,42) und einer darüber angeordneten, gelochten Membrane (3,43), welche beide in ihren Randbereichen mittels einer Befestigungsvorrichtung (5,45) derart miteinander verbunden sind, dass die Membrane (3,43) bei fehlender oder geringer Gaszufuhr auf der Grundplatte (2) aufliegt, wobei ein Aufwölben der Membrane (3,43) bei Gaszufuhr stattfindet, und die Vorrichtung (5,45) als dreiteilige Klemmsitz-Abdichtung aus zwei gleich geformten Profilen (6,7,46,67) mit der Querschnittsform eines halben Schwalbenschwanzes für den Einsatz in eine Ausnehmung (11) mit schwalbenschwanzförmigem Querschnitt ausgebildet ist, welche zwei Profile (6,7,46,47) durch ein mittiges Profil (8,48) nach aussen, gegen die Seitenwände (12) der Ausnehmung (11), vorgespannt sind, dadurch gekennzeichnet, dass die drei Profile (6-8,46-48) jeweils einteilig sind und zusammen eine umlaufende Abdichtung bilden, die gleiche Höhe und Breite aufweisen und zudem in der Ebene der Grundplatte (2) formbeständig biegsam sind und dass die beiden äusseren Profile (6,7,46,47) an der der Seitenwandung (12) zugekehrten Fläche, wie diese selbst, im Querschnitt treppenförmig ausgebildet sind.

2. Gasverteiler nach Anspruch 1, dadurch gekennzeichnet, dass das mittlere Profil (48) glatte Seitenflächen oder solche mit widerhakenförmigen Vorsprüngen (59) aufweist, die in Rillen (73) in den zugewandten Seitenflächen der äusseren Profile (46,47) eingreifen.

3. Gasverteiler nach Anspruch 1 oder 2, dadurch gekennzeichnet, dass die Grundplatte (2) mit daran angeordneter Membrane (3) zwischen einem Rost-Unterteil (24) und einem Rost-Oberteil (23) mittels Haken (26,28) und Schnellverschluss (29,30) befestigt ist.

4. Gasverteiler nach Anspruch 3, dadurch gekennzeichnet, dass der Schnellverschluss durch eine Drehbewegung um 90° verschliess- bzw. lösbar ist.

5. Gasverteiler nach Anspruch 3, dadurch gekennzeichnet, dass die Grundplatte (2), die Membrane (3,43) und ein darüber angeordneter Formkörper (76) über Längsträger (31) miteinander verbunden sind.

6. Gasverteiler nach Anspruch 1, dadurch gekennzeichnet, dass der Querschnitt des der Membrane (3) zugekehrten Endes des mittleren Profils (8) zum gegenüberliegenden Ende hin verjüngt ist.

7. Gasverteiler nach Anspruch 1, dadurch gekennzeichnet, dass alle drei Profile (6-8) für eine bogenförmige Ausnehmung (11) mit schwalbenschwanzförmigem Querschnittin der Grundplatte (2) ausgelegt sind.

8. Gasverteiler nach einem der Ansprüche 1 bis 7, dadurch gekennzeichnet, dass jedes Profil (6-8) den gesamten Mittelbereich der Grundplatte (2) und der Membrane (3) am Rande ringförmig umfasst und eine Klemmsitz-Abdichtung bildet.

9. Gasverteiler nach einem der Ansprüche 1 bis 8, dadurch gekennzeichnet, dass die der Seitenwand (12) der Ausnehmung (11) zugekehrte Seitenfläche (15) der äusseren Profile (6,7) zur besseren Halterung der Membrane (3)mit im Querschnitt treppenartigen Rillen (9) versehen sind.

10. Gasverteiler nach einem der Ansprüche 1 bis 9, dadurch gekennzeichnet, dass die einzelnen Profile (6-8) endlos ausgebildet sind, und dass die Ausnehmung (11) in der Grundplatte (2) leicht schlangenförmig verläuft.

## Claims

1. Gas-distributor for fine-bubble water aeration, with a floor plate (20) and a base plate (2,42) with a perforated membrane (3,43) extending thereon, which both are connected to each other in the rim areas by means of an attachment device (5,45), so that the membrane (3,43) in the case of non-existent or low gas supply rests on the base plate (2,42) and bulges when gas is supplied, and that said device comprises a tripartite force fit sealing of two equal shaped profiles (6,7, 46 47) with the cross-section of one half dovetail for insertion into a recess (11) with dovetail-shaped cross-section, which two profiles (6,7,46,47) are pressed outwardly against the side walls (12) of the recess (12), **characterized in** that the three profiles (6-8,46-48) each consists of a single piece, and that they together form a circular sealing (6-8,46-48), have the same height and width, and in the plane of the base plate (2) are nondeformably bendable, and that both outer profiles (6,7,46,47) on the wall (9) facing the side wall (12) of the recess (11) in cross-section is stepped like the side wall (12) itself.

2. Gas-distributor according to claim 1, **characterized in that** the middle profile (48) has even side walk or such with barb-shaped projections (59) engaging grooves (73) in the facing side walk of the outer profiles (46,47)(Fig. 9).

3. Gas-distributor according to claim 1 or 2, **characterized in that** the base plate (2) including the membrane (3) between a lower grid portion (24) and an upper grid portion (23) are fastened by means of a hook (26,28) and a snap closure (29,30)(Fig. 6-8).

4. Gas-distributor according to claim 3, **characterized in that** the snap closure (29,30) is lock-or unlockable by means of a 90°-rotation (Fig. 6-8).

5. Gas-distributor according to claim 3, **characterized in that** the base plate (42), the member and a shaped body (76) are connected by means of stringers (31)(Fig. 11).

6. Gas-distributor according to claim 1, **characterized in that** the cross section of the end of the middle profile (8) facing the membrane is narrowed toward the opposite end (Fig. 3).

7. Gas-distributor according to claim 1, **characterized in that** the profiles (6-8) are designed for a curve-shaped recess (11) with dovetail-shaped cross-section in the base plate (2)(Fig. 2).

8. Gas-distributor according to one of the claims 1-7, **characterized in that** each profile (6-8) encircles the entire medium area of the base plate (2) and of the membrane (3) and form a force fit sealing (Fig. 1-2).

9. Gas-distributor according to one of the claims 1-8, **characterized in that** the wall facing the side wall (12) of the recess (11) in cross-section is provided with step-shaped grooves (9) for improved grip on the membrane (3)(Fig. 3).

10. Gas-distributor according to one of the claims 1-9, **characterized in that** each profile is endless, and that the recess (11) in the base plate (2) is serpentine-shaped (Fig. 1).

## Revendications

1. Diffuseur de gaz à bulles fines pour l'aération de l'eau, comprenant une plaque de fond (20), une plaque de base (2, 42) et une membrane perforée (3, 43) disposée par-dessus, ces deux dernières étant reliées l'une à l'autre dans leurs zones marginales à l'aide d'un dispositif de fixation (5, 45) de telle sorte que la membrane (3, 43) s'appuie sur la plaque de base (2) en cas d'alimentation manquante ou minime en gaz, la membrane (3, 43) formant une voûte en cas d'alimentation de gaz, et que le dispositif (5, 45) est réalisé sous forme d'étanchement en trois parties à ajustement pressé, constitué par deux profilés de même configuration (6, 7, 46, 47) dont la section transversale a la forme d'une demi queue-d'aronde pour l'insertion dans un évidement (11) à section transversale en queue-d'aronde, lesdits deux profilés (6, 7, 46, 47) étant mis en état de prétension à l'aide d'un profilé central (8, 48) vers l'extérieur contre les parois latérales (12) de l'évidement (11), caractérisé en ce que les trois profilés (6-8, 46-48) sont réalisés respectivement en une seule pièce et forment conjointement un étanchement périphérique, les profilés présentant la même hauteur et la même largeur et étant en outre aptes à fléchir d'une manière résistant à la déformation dans le plan de la plaque de base (2), et en ce que les deux profilés externes (6, 7, 46, 47) sont réalisés, à la surface qui fait face à la paroi latérale (12), tout comme la surface latérale elle-même, dans leur section transversale en forme de gradins.

2. Diffuseur de gaz selon la revendication 1, caractérisé en ce que le profil central (48) présente des surfaces latérales lisses ou encore des surfaces latérales comprenant des saillies (59) en forme de barbe, qui viennent s'engrener dans des rainures (73) pratiquées dans les surfaces latérales des profilés externes (46, 47) (figure 9) qui lui font face.

3. Diffuseur de gaz selon la revendication 1 ou 2, caractérisé en ce que la plaque de base (2) et la membrane (3) qui y est disposée, sont fixées entre une partie inférieure de grille (24) et une partie supérieure de grille (23) à l'aide de crochets (26, 28) et d'une fermeture rapide (29, 30) (figures 6-8).

4. Diffuseur de gaz selon la revendication 3, caractérisé en ce que la fermeture rapide (29, 30) peut être verrouillée ou déverrouillée par un mouvement de rotation de 90° (figures 6-8).

5. Diffuseur de gaz selon la revendication 3, caractérisé en ce que la plaque de base (42), la membrane (43) et un corps moulé (76) disposé par-dessus, sont reliés l'un à l'autre à l'aide d'un support longitudinal (31) (figure 11).

6. Diffuseur de gaz selon la revendication 1, caractérisé en ce que la section transversale de l'extrémité du profilé central (8), tournée vers la membrane (3) se rétrécit en direction de l'extrémité opposée (figure 3).

7. Diffuseur de gaz selon la revendication 1, caractérisé en ce que l'ensemble des trois profilés (6-8) sont dimensionnés dans la plaque de base (2) pour un évidement arqué (11) à section transversale en forme de queue-d'aronde (figure 2).

8. Diffuseur de gaz selon l'une quelconque des revendications 1 à 7, caractérisé en ce que chaque profilé (6-8) entoure la zone médiane totale de la plaque de base (2) et de la membrane (3) au bord de manière annulaire et forme un étanchement à ajustage pressé (figures 1-2).

9. Diffuseur de gaz selon l'une quelconque des revendications 1 à 8, caractérisé en ce que la surface latérale (15) des profilés externes (6, 7), tournée vers la paroi latérale (12) de l'évidement (11) est munie de rainures (9) dont la section transversale est en forme de gradins pour une meilleure fixation de la membrane (3) (figure 3).

10. Diffuseur de gaz selon l'une quelconque des revendications 1 à 9, caractérisé en ce que la forme des profilés individuels (6-8) est réalisée en continu, et en ce que l'évidement (11) s'étend légèrement en serpentin dans la plaque de base (2) (figure 1).
